# EUROPÄISCHE PATENTANMELDUNG

(11) **EP 0 833 467 A2**
(43) Veröffentlichungstag der Anmeldung: **01.04.1998**
(21) Anmeldenummer: 97116433.0
(22) Anmeldetag: 20.09.1997
(51) Int. Cl.: H04B 10/22

(54) **Vorrichtung zur Datenübertragung, insbesondere an Fahrzeugen**

(30) Priorität: 25.09.1996 DE 19639210
(71) Anmelder: KUKA Wehrtechnik GmbH, D-86165 Augsburg (DE)
(72) Erfinder: Ottenthal, Thomas, 86169 Augsburg (DE); Zoz, Jürgen, Dr. Dipl-Ing., 86316 Friedberg (DE)
(74) Vertreter: Lasch, Hartmut Dipl.-Ing.

(57) **Zusammenfassung**

Eine Vorrichtung zur Datenübertragung zwischen einem Basisteil und einem relativ dazu bewegbaren Aufbau insbesondere bei Fahrzeugen umfaßt einen an dem Basisteil oder dem Aufbau angeordnetem Sender und einen am entsprechenden anderen Bauteil angeordneten Empfänger. Der Sender und der Empfänger stehen über einen Leiter miteinander in Verbindung. Um eine gute Übertragungsqualität zu gewährleisten ist vorgesehen, daß der Sender eine Lichtquelle und der Empfänger ein lichtempfindlicher Detektor ist und daß der Leiter ein rohrförmiger Lichtleitkanal ist, der an dem Basisteil und/oder dem Aufbau ausgebildet ist. Vorzugsweise ist die Vorrichtung in ein Drehlager zwischen dem Basisteil und dem Aufbau integriert, wobei ein um das Drehlager umlaufender, als Lichtleitkanal wirkender ringförmiger Hohlleiter ausgebildet ist, in dem der Sender und der Empfänger angeordnet sind.

## Beschreibung

Die Erfindung betrifft eine Vorrichtung zur Datenübertragung zwischen einem Basisteil und einem relativ dazu bewegbaren Aufbau insbesondere in Fahrzeugen, mit einem an dem Basisteil oder dem Aufbau angeordnetem Sender und einem am entsprechend anderen Bauteil angebrachten Empfänger, die über einen Leiter miteinander in Verbindung stehen.

In vielen Bereichen der Technik ist es notwendig, zwischen zwei relativ zueinander bewegbaren Bauteilen in jeder Relativstellung eine gute Datenübertragung sicherzustellen. Beispielhaft sei im folgenden von der Datenübertragung zwischen dem Unterbau eines Panzers und einem darauf drehbar gelagerten Turm ausgegangen, jedoch treten gleichartige Probleme auch bei anderen Ketten- oder Radfahrzeugen sowie bei Kränen oder Baggern auf.

Bei einem Panzer sind sowohl die Stromversorgung als auch die zentralen elektronischen Steuer- und Recheneinrichtungen auf dem Panzerchassis bzw. im Innenraum angeordnet, so daß es notwendig ist, dem drehbar gelagerten Turm mit der Waffe die notwendigen Daten und Informationen bzw. den Strom zuzuführen. Eine besondere Schwierigkeit besteht darin, daß der Turm in seiner Drehung nicht beschränkt ist, d.h. beliebig oft hintereinander vollständige Umdrehungen ausführen kann, so daß die Übertragung der Daten und Informationen mittels eines Kabels nicht bzw. nur unter Beschränkung der Umdrehungsanzahl möglich ist, da es ansonsten zu einer Tordierung des Kabels und somit zu dessen Beschädigung kommen kann. Die gleichen Probleme treten auf, wenn auf dem Turm eine Videokamera installiert ist, deren Bilder und Daten dem im Innenraum des Panzers angeordneten Zentralrechner zugeführt werden müssen.

Für die Stromübertragung zwischen dem Panzerinnenraum und dem Turm haben sich Schleifringkontakte bewährt. Dabei sind auf der Unterseite der im Turm angeordneten Bühne koaxial zur Drehachse ein oder mehrere Schleifringe aus elektrisch leitendem Material angeordnet, die mit ortsfesten Kontakten in Anlage stehen, so daß die Verbindung zwischen den Kontakten und den Schleifringen in jeder Drehlage des Turms sichergestellt ist. Jedoch benötigen Schleifringkontakte einen relativ großen Bauraum. Insbesondere bei kleineren Türmen ist eine Bühne nicht mehr vorhanden, so daß der Innenraum des Turm direkt in den Innenraum des Fahrzeugs übergeht. Die Anordnung von Schleifringkontakten ist dabei sehr schwierig.

Der Erfindung liegt die Aufgabe zugrunde, eine Vorrichtung zur Datenübertragung insbesondere bei Fahrzeugen zu schaffen, die eine gute Übertragungsqualität zuverlässig gewährleistet und flexibel an die baulichen Gegebenheiten anpaßbar ist.

Diese Aufgabe wird erfindungsgemäß dadurch gelöst, daß der Sender eine Lichtquelle und der Empfänger ein lichtempfindlicher Detektor ist und daß der Leiter ein rohrförmiger Lichtleitkanal ist, der an dem Basisteil und/oder dem Aufbau ausgebildet ist.

Erfindungsgemäß werden die Daten, Informationen oder Bilder zwischen dem Basisteil, d.h. dem Unterbau des Panzers, und dem Aufbau, d.h. dem Turm, über mit dem Datensignal modulierte elektromagnetische Wellen und insbsondere über Lichtimpulse übertragen. Dazu werden die Daten in bekannter Weise digialisiert und dann in Lichtimpulse umgesetzt, die von der als Sender dienenden Lichtquelle, die insbesondere von einer Leucht- oder Laser-Diode, beispielsweise einer Infrarot-Diode gebildet sein kann, in serieller Weise durch den Lichtleitkanal hindurch an den Empfänger übertragen werden. Als Empfänger sind lichtempfindliche Detektoren, insbesondere PIN-Dioden oder APDs (Avalanche Photo Diode) vorgesehen.

Zur Datenübertragung wird ein rohrförmiger Lichtleitkanal verwendet. Dabei werden die Lichtimpulse auf den Innenseiten der inneren Ober- bzw. Grenzflächen reflektiert und auf diese Weise längs des Lichtleitkanals transportiert. Bei dem rohrförmigen Lichtleitkanal kann es zu Erhöhung der Reflexionsfähigkeit sinnvoll sein, auf der Innenoberfläche eine spezielle reflektierende Beschichtung insbesondere aus einem Metall (Aluminium, Silber, Gold) aufzubringen, was in an sich bekannter Weise durch bedampfen geschehen kann.

Es hat sich gezeigt, daß durch die erfindungsgemäße serielle Datenübertragung per Lichtimpulsen eine hohe Datenübertragungsrate bei gleichzeitiger hoher Übertragungsstabilität erreicht werden kann. Darüberhinaus bringt die erfindungsgemäße Vorrichtung den Vorteil mit sich, daß das Basisteil, d.h. der Panzerunterbau, und der Aufbau, d.h. der Turm, für die Datenübertragung nicht mechanisch verbunden sein müssen, wie es bei herkömmlichen Kabeln oder Schleifringkontakten der Fall ist. Auf diese Weise kann eine vollständige mechanische und galvanische Trennung zwischen dem Panzerunterbau und dem Turm erreicht werden, so daß der Turm beliebige Drehbewegungen ausführen kann, ohne die Datenübertragung zu beeinflussen.

Der Lichtleitkanal ermöglicht es, die Anordnung des Senders und des Empfängers jeweils an die baulichen Gegebenheiten des Fahrzeugs anzupassen, so daß der für die Übertragungsvorrichtung benötigte Bauraum minimiert werden kann.

In einer besonders vorteilhaften Ausgestaltung der Erfindung ist der als Hohlleiter ausgebildete Lichtleitkanal in das Drehlager integriert, über den der Turm drehbar auf dem Panzerunterbau gelagert ist. Als derartiges Drehlager findet insbesondere ein Drehkranz Verwendung, bei dem ein an der Unterseite des Turms angebrachtes, ringförmiges Drehlagerteil über ein umlaufendes Kugellager mit einem entsprechenden ringförmigen Drehlagerteil des Panzerunterbaus in Verbindung steht. Dabei kann vorgesehen sein, daß der Lichtleitkanal um das Drehlager ringförmig umlaufend ausgebildet ist und der Sender und der Empfänger in dem Lichtleitkanal angeordnet sind.

Alternativ ist es auch möglich, den Lichtleitkanal in ein Linearlager zu integrieren, über das ein Fahrzeugaufbau verschieblich auf einem Fahrzeugunterbau abgestützt ist. Auch hierbei können der Sender und der Empfänger in dem Lichtleitkanal angeordnet sein. Falls es die baulichen Gegebenheiten zulassen, ist es auch möglich, den Sender und/oder den Empfänger außerhalb des Lichtleitkanals anzuordnen und dann mit Hilfe von Lichtleitelementen, beispielsweise Umlenkprismen eine optische Verbindung mit dem Innenraum des Lichtleitkanals herzustellen.

In einer bevorzugten Ausgestaltung der Erfindung ist auf einander zugewandten Oberflächen des Lagerteils des Aufbaus und des Lagerteils des Basisteils jeweils eine Halbschale ausgebildet, die derart einander zugewandt sind, daß sie im Zusammenwirken den Hohlleiter bzw. Lichtleitkanal bilden. Die Halbschalen können jeweils als Nut ausgebildet sein, die in die Lagerteile eingeschliffen ist, alternativ ist es jedoch auch möglich, die Halbschalen aus vorgefertigten Kunststoffprofilen zu bilden, die eine aufgedampfte oder aufgespatterte Spiegelschicht besitzen und an den Lagerteilen angebracht werden. Wenn die Lagerteile aus stranggepreßten Aluminiumprofilen bestehen, können die Halbschalen bereits bei der Herstellung ausgebildet werden.

Zur Erzielung eines hohen Reflexionsgrades hat es sich bewährt, die Halbschalen bzw. Nuten jeweils mit einem halbkreisförmigen Querschnitt auszubilden, so daß der Lichtleitkanal insgesamt einen Kreisquerschnitt besitzt.

In einer ersten Ausgestaltung sitzt der Sender in der Halbschale oder Nut des einen Lagerteils, während der Empfänger in der Halbschale oder Nut des anderen Lagerteils angeordnet ist. Wenn der Turm relativ zum Panzerunterbau gedreht wird, werden auch die beiden Halbschalen oder Nuten relativ zueinander verdreht, wobei jedoch immer ein um das Drehlager umlaufender kreisringförmiger Lichtleitkanals gegeben ist. Bei Drehung des Turm führen auch der Sender und der Empfänger eine Relativbewegung zueinander aus, wobei jedoch beide innerhalb des Lichtleitkanals angeordnet bleiben, so daß die Übertragung der Daten durch den Lichtleitkanal bzw. Hohlleiter in jeder Stellung möglich ist. Eine entsprechende Ausgestaltung kann auch bei einem Linearlager vorgesehen sein.

Die beiden einander zugewandten Oberflächen der Lagerteile, in denen jeweils die Halbschalen oder Nuten ausgebildet sind, müssen konstruktionsbedingt einen geringen Abstand voneinander aufweisen. Auf diese Weise sind an den Stoßstellen der Lagerteile Spalte gebildet, durch die Lichtimpulse nach außen dringen können, so daß die Übertragungsrate nachteilig beeinflußt ist. In Weiterbildung der Erfindung kann deshalb vorgesehen sein, daß die Spalte an den Stoßstellen der Lagerteile abgedichtet und ggf. innenseitig ebenfalls mit einer reflektierenden Beschichtung versehen sind.

In einer weiteren Ausgestaltung der Erfindung kann vorgesehen sein, daß der Lichtleitkanal an einem der Lagerteile, beispielsweise als ein um das Drehlager umlaufender Ring oder als parallel zum Linearlager verlaufendes Rohr, ausgebildet ist und über seine gesamte Länge einen Schlitz aufweist, durch den ein am anderen Lagerteil angebrachter Kalter in den Lichtleitkanal eingreift, wobei der Sender oder der Empfänger am Halter angebracht ist. Auch hierbei kann der am Halter angebrachte Sender oder Empfänger bei Drehung des Turms relativ zu dem Lichtleitkanal bewegt werden, wobei er in jeder Stellung mit dem im Lichtleitkanal angeordneten anderen Bauteil (Empfänger oder Sender) kommunizieren kann.

Falls sich bei Betrieb des Panzers in dem Lichtleitkanal bzw. Hohlleiter Feuchtigkeit ansammeln sollte, könnte diese das Reflexionsvermögen herabsetzen. Erfindungsgemäß kann deshalb vorgesehen sein, daß der Lichtleitkanal beheizbar ist, so daß der Niederschlag von Feuchtigkeit vermieden werden kann.

Falls sich im Laufe der Zeit an der Reflexionsfläche des Lichtleitkanals Verunreinigungen absetzen sollten, können diese dadurch entfernt werden, daß in den Lichtleitkanal eine Reinigungsvorrichtung einbringbar ist. Dabei kann es sich beispielsweise um einen ausfahrbaren Bürstenkopf handeln.

Zusätzlich zu der Datenübertragung zwischen dem Basisteil und dem relativ dazu bewegbaren Aufbau ist es notwendig, auch eine Energieversorgung zwischen diesen Bauteilen vorzusehen. Dies erfolgt erfindungsgemäß in an sich bekannter Weise mit Hilfe zumindest einer Schleifkontaktbahn, die jedoch in bevorzugter Ausgestaltung der Erfindung in den Lichtleitkanal integriert sein kann.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: Eine ausschnittsweise Schnittdarstellung eines Drehlagers mit einer Datenübertragungsvorrichtung gemäß einem ersten Ausführungsbeispiel und
- Figur 2: eine der Figur 1 entsprechende Darstellung mit einer Datenübertragungsvorrichtung gemäß einem zweiten Ausführungsbeispiel.

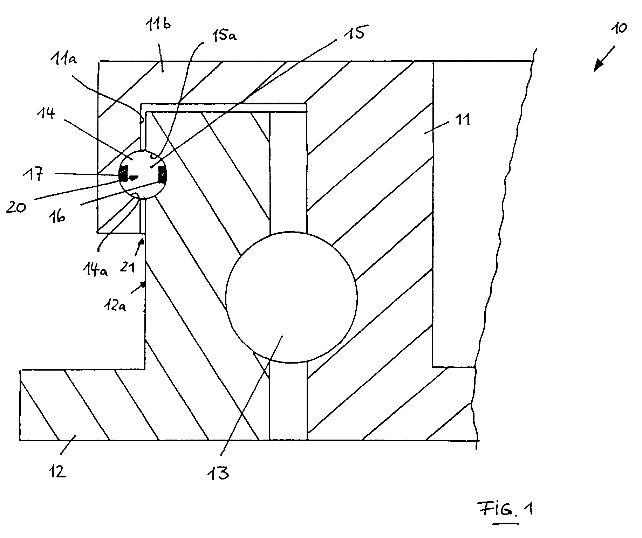

In Figur 1 ist ein Drehlager 10 dargestellt, über das beispielsweise der Turm eines Panzers an dem Panzerunterbau drehbar gelagert sein kann. Am Panzerunterbau ist ein ringförmiges Drehlagerteil 12 angebracht, dem koaxial ein am Turm angebrachtes ringförmiges Drehlagerteil 11 zugeordnet ist. Die Drehlagerteile 11 und 12 stehen über eine umlaufende Kugellagerung 13 drehbar miteinander in Verbindung.

Wie Figur 1 zeigt, weist das innere Drehlagerteil 11 einen das äußere Drehlagerteil 12 übergreifenden, L-förmigen Kragen 11b auf, so daß eine innere Umfangsfläche 11a des Kragens 11b einer äußeren Umfangsfläche 12a des Drehlagers 12 in geringem Abstand gegenüberliegt. Sowohl in der Innenumfangsfläche 11a des Kragens 11b als auch der Außenumfangsfläche 12a des Drehlagers 12 ist jeweils eine halbkreisförmige, um das Drehlager 12 umlaufende Nut 14 bzw. 15 vorgesehen. Die Nuten 14 und 15 sind so angeordnet, daß sie im Zusammenwirken einen als Lichtleitkanal wirkenden Hohlleiter 20 mit Kreisquerschnitt bilden. In der Nut 14 des Kragens 11b des Drehlagerteils 11 ist ein Sender 17 in Form einer Leucht- oder Laser-Diode angeordnet. In der Nut 15 des Drehlagerteils 12 ist entsprechend ein Empfänger 16 angebracht. Sowohl die Oberfläche 14a der Nut 14 als auch die Oberfläche 15a der Nut 15 sind durch Aufbringen einer metallischen Beschichtung in ihrer Reflexionswirkung erhöht.

Der Sender 17 und der Empfänger 16 sind in nicht näher dargestellter Weise angeschlossen. Da bei dem gezeigten Ausführungsbeispiel der Sender 17 an dem Kragen 11b des inneren Drehlagerteils 11, das mit dem Turm in Verbindung steht, angebracht ist, dient die gezeigte Vorrichtung zur Übertragung von Signalen aus dem Turm in den Innenraum des Panzers. Unabhängig von der Drehstellung der beiden Drehlagerteile 11 und 12 relativ zueinander ist immer ein kreisförmiger, umlaufender Hohlleiter 20 gebildet, in dem sowohl der Sender 17 als auch der Empfänger 16 angeordnet sind.

Die beiden einander zugewandten Oberflächen 11a und 12a der Drehlagerteile 11 und 12 bilden zwischen sich einen geringen Spalt 21, der in nicht dargestellter Weise abgedichtet sein kann.

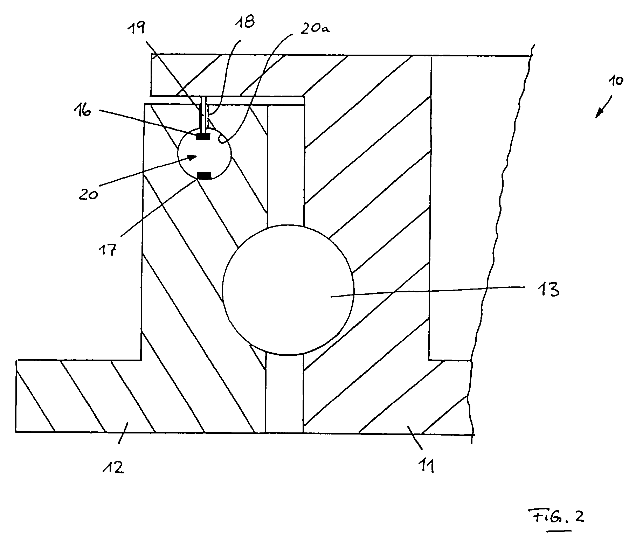

Figur 2 zeigt ein alternatives Ausführungsbeispiel der Erfindung, wobei der Hohlleiter 20 vollständig in dem äußeren Drehlagerteil 12 in Form eines umlaufenden Ringkanals ausgebildet ist. In seinem oberen Bereich besitzt der Hohlleiter 20 einen sich über die gesamte Länge des Hohlleiters 20 erstreckenden Schlitz 18, durch den ein Halter 19 hindurchgreift, an dessen unterem Ende der Empfänger 16 angeordnet ist. Der Sender 17 ist im Hohlleiter 20 montiert. Wenn das innere Drehlagerteil 11 relativ zum äußeren Drehlagerteil 12 gedreht wird, verfährt der Halter 19 längs des Schlitzes 18, wodurch auch der Empfänger 16 entlang des Hohlleiters 20 verschoben wird. Auch hierbei sind in jeder Drehstellung der beiden Drehlagerteile 11 und 12 sowohl der Sender 17 als auch der Empfänger 16 in dem Hohlleiter 20 angeordnet.

## Patentansprüche

1. Vorrichtung zur Datenübertragung zwischen einem Basisteil und einem relativ dazu bewegbaren Aufbau insbesondere in Fahrzeugen, mit einem an dem Basisteil oder dem Aufbau angeordneten Sender und einem am entsprechend anderen Bauteil angeordneten Empfänger, die über einen Leiter miteinander in Verbindung stehen, dadurch gekennzeichnet, daß der Sender (17) eine Lichtquelle und der Empfänger (16) ein lichtempfindlicher Detektor ist und daß der Leiter ein rohrförmiger Lichtleitkanal (20) ist, der an dem Basisteil und/oder dem Aufbau ausgebildet ist.

2. Vorrichtung nach Anspruch 1, dadurch gekennzeichnet, daß die Lichtquelle eine Leucht- oder Laser-Diode, insbesondere eine Infrarot-Diode (17) ist.

3. Vorrichtung nach Anspruch 1 oder 2, dadurch gekennzeichnet, daß der rohrförmige Lichtleitkanal (20) auf seiner Innenoberfläche (14a, 15a; 20a) reflektierend ist oder eine reflektierende Beschichtung trägt.

4. Vorrichtung nach einem der Ansprüche 1 bis 3, wobei der Aufbau über ein Dreh- oder Linearlager auf dem Basisteil drehbar oder verschieblich abgestützt ist, dadurch gekennzeichnet, daß der Lichtleitkanal (20) in Dreh- oder Verschieberichtung verläuft.

5. Vorrichtung nach Anspruch 4, dadurch gekennzeichnet, daß der Lichtleitkanal (20) um das Drehlager (10) ringförmig umlaufend ausgebildet ist.

6. Vorrichtung nach Anspruch 4 oder 5, dadurch gekennzeichnet, daß der Sender (17) und der Empfänger (16) in dem Lichtleitkanal (20) angeordnet sind.

7. Vorrichtung nach Anspruch 4 oder 5, dadurch gekennzeichnet, daß der Sender und/oder der Empfänger außerhalb des Lichtleitkanals (20) angeordnet sind.

8. Vorrichtung nach einem der Ansprüche 4 bis 7, dadurch gekennzeichnet, daß auf einander zugewandten Flächen (11a, 12a) eines Lagerteils (11) des Aufbaus und eines Lagerteils (12) des Basisteils jeweils eine Halbschale (14, 15) ausgebildet ist, wobei die Halbschalen (14, 15) im Zusammenwirken den Lichtleitkanal (20) bilden.

9. Vorrichtung nach Anspruch 8, dadurch gekennzeichnet, daß die Halbschalen jeweils als eine Nut (14, 15) ausgebildet sind.

10. Vorrichtung nach Anspruch 8, dadurch gekennzeichnet, daß die Halbschalen aus Kunststoffprofilen bestehen, die an den Lagerteilen (11, 12) angebracht sind.

11. Vorrichtung nach einem der Ansprüche 8 bis 10, dadurch gekennzeichnet, daß die Halbschalen (14, 15) jeweils einen halbkreisförmigen Querschnitt aufweisen.

12. Vorrichtung nach einem der Ansprüche 8 bis 11, dadurch gekennzeichnet, daß der Sender (17) in der Halbschale (14) des einen Lagerteils (11) und der Empfänger (16) in der Halbschale (15) des anderen Lagerteils (12) angeordnet ist.

13. Vorrichtung nach einem der Ansprüche 8 bis 12, dadurch gekennzeichnet, daß der Lichtleitkanal (20) an den Stoßstellen der Lagerteile (11, 12) abgedichtet ist.

14. Vorrichtung nach einem der Ansprüche 4 bis 13, dadurch gekennzeichnet, daß der Lichtleitkanal (20) an einem der Lagerteile (12) ausgebildet ist und über seine gesamte Länge einen Schlitz (18) aufweist, durch den ein am anderen Lagerteil (11) angebrachter Halter (19) in den Lichtleitkanal (20) eingreift, wobei der Sender (17) oder der Empfänger (18) am Halter (19) angebracht ist.

15. Vorrichtung nach einem der Ansprüche 1 bis 14, dadurch gekennzeichnet, daß der Lichtleitkanal (20) beheizbar ist.

16. Vorrichtung nach einem der Ansprüche 1 bis 15, dadurch gekennzeichnet, daß in den Lichtleitkanal (20) eine Reinigungsvorrichtung einbringbar ist.

17. Vorrichtung nach einem der Ansprüche 1 bis 16, dadurch gekennzeichnet, daß zur Energieübertragung zwischen dem Basisteil und dem Aufbau zumindest eine Schleifkontaktbahn angeordnet ist.

18. Vorrichtung nach Anspruch 17, dadurch gekennzeichnet, daß die Schleifkontaktbahn parallel zum Lichtleitkanal (20) verläuft.

19. Vorrichtung nach Anspruch 17 oder 18, dadurch gekennzeichnet, daß die Schleifkontaktbahn in den Lichtleitkanal (20) integriert ist.
